# EUROPÄISCHE PATENTANMELDUNG

(11) **EP 3 778 285 A1**
(43) Veröffentlichungstag der Anmeldung: **17.02.2021**
(21) Anmeldenummer: 19192100.6
(22) Anmeldetag: 16.08.2019
(51) Int. Cl.: B60L 1/00, B60L 50/13

(54) **ANTRIEBSSYSTEM EINES DIESEL-ELEKTRISCHEN FAHRZEUGS**

(71) Anmelder: Siemens Aktiengesellschaft, 80333 München (DE)
(72) Erfinder: Köhler, Marco, 91233 Neunkirchen a. Sand (DE)

(57) **Zusammenfassung**

Die Erfindung betrifft ein Antriebssystem (1) eines dieselelektrischen Fahrzeugs mit
- zumindest einem Dieselmotor (2),
- zumindest einer dynamoelektrischen Maschine (5), vorzugsweise als Generator (5) arbeitend, mit einer Hauptwicklung (20) und einer Hilfsbetriebewicklung (21), wobei die dynamoelektrische Maschine (5) mit dem Dieselmotor (2) mechanisch gekoppelt ist und insbesondere die elektrische Leistung für zumindest einen elektrischen Antrieb bereitstellt,
wobei der elektrische Antrieb zumindest einen elektrischen Fahrmotor (16) und einen Betriebs-Zwischenkreisumrichter (30) aufweist, mit zumindest einem Gleichrichter (7) und zumindest einem Wechselrichter (8), wobei elektrisch parallel zu dem Gleichrichter (7) ein selbstgeführter, aktiv geregelter Hilfs-Wechselrichter (6) vorgesehen ist, der mit seiner Gleichspannungs-(DC)-Seite mit einem Hauptzwischenkreis (9) des Betriebs-Zwischenkreisumrichters (30) elektrisch verbunden ist und mit der Wechselspannungs-(AC)-Seite mit der Hilfsbetriebewicklung (21) verbunden ist, wobei auf der Gleichspannungs-(DC)-Seite des selbstgeführter, aktiv geregelter Hilfs-Wechselrichter (6) zumindest ein elektrischer Speicher (17) vorgesehen ist.

## Beschreibung

Die Erfindung betrifft einen Antrieb eines diesel-elektrischen Fahrzeugs, insbesondere Miningfahrzeugs und Verfahren zum Betrieb des diesel-elektrischen Fahrzeugs, insbesondere Miningfahrzeugs.

Aufgrund der bei üblichen diesel-elektrischen Fahrzeugen fehlenden Rückspeisefähigkeit des Antriebs-Umrichters muss der Dieselmotor auch bei Bergabfahrten weiterhin Leistung bereitstellen, um beispielsweise Hilfsaggregate anzutreiben, wie z.B. Lüfter und/oder Hydraulikpumpen, die zur Lenkung und/ oder zur mechanischen Bremsbereitschaft im Betrieb des diesel-elektrischen Fahrzeugs permanent versorgt werden müssen.

Ebenso sind die Reibungsverluste des Antriebsstrangs zu decken, obwohl ausreichend Energie aus dem elektrischen Bremsbetrieb der elektrischen Fahrmotoren oder des elektrischen Fahrmotors zur Verfügung stünde.

Dieser quasi-Leerlaufbetrieb des Dieselmotors erhöht u.a. den Treibstoffverbrauch und belastet außerdem die Umwelt durch Emissionen.

Sobald das Fahrzeug verzögert wird oder es bergab fährt, werden der oder die elektrischen Fahrmotoren zum Bremsen benutzt. Diese Bremsenergie wird über den oder die Wechselrichter in den Zwischenkreis des Antriebs-Umrichters eingespeist und von dort über einen Bremschopper im Bremswiderstand in Wärmeenergie umgewandelt.

Bei diesen Fahrzeugen wird aufgrund des Gleichrichters mit fehlender Rückspeisefähigkeit der Dieselmotor auch für Bergabfahren weiterhin Leistung aufbringen müssen, um die oben genannten Hilfsaggregate zu versorgen.

Um diese Hilfsaggregate elektrisch aus der Bremsenergie zu versorgen, wäre es möglich, statt des Gleichrichters einen selbstgeführten, aktiv geregelten Wechselrichter, auch als Active Front End (AFE) bezeichnet, einzusetzen. Allerdings ist ein AFE, der im Fahrbetrieb und Bremsbetrieb des Fahrzeugs die volle Dieselleistung übertragen muss, vergleichsweise kostspielig und beansprucht deutlich mehr Bauraum als ein Gleichrichter.

Ausgehend davon liegt der Erfindung die Aufgabe zugrunde, ein Antriebssystem eines diesel-elektrischen Fahrzeugs bereitzustellen, das die elektrische Energie der oder des Fahrmotors, vor allem in einem Rückspeisebetrieb besser ausnutzt. Der Begriff diesel-elektrisches Fahrzeug steht dabei für ein Fahrzeug, das allgemein betrachtet auch zumindest einen Verbrennungsmotor aufweist.

Eine Lösung der Aufgabe ergibt sich nach Anspruch 1, 2, 7, 8 und 9.

Weitere Ausgestaltungen ergeben sich nach einem der Unteransprüche.

Eine Lösung der gestellten Aufgabe gelingt also durch Antriebssystem eines diesel-elektrischen Fahrzeugs mit
- zumindest einem Dieselmotor,
- zumindest einer dynamoelektrischen Maschine, vorzugsweise als Generator arbeitend, mit einer Hauptwicklung und einer Hilfsbetriebewicklung, wobei die dynamoelektrische Maschine mit dem Dieselmotor mechanisch gekoppelt ist und insbesondere die elektrische Leistung für zumindest einen elektrischen Antrieb bereitstellt,
wobei der elektrische Antrieb zumindest einen elektrischen Fahrmotor und einen Betriebs-Zwischenkreisumrichter aufweist, mit zumindest einem Gleichrichter und zumindest einem Wechselrichter, wobei elektrisch parallel zu dem Gleichrichter ein selbstgeführter, aktiv geregelter Hilfs-Wechselrichter vorgesehen ist, der mit seiner Gleichspannungs-(DC)-Seite mit einem Hauptzwischenkreis des Betriebs-Zwischenkreisumrichters elektrisch verbunden ist und mit der Wechselspannungs-(AC)-Seite mit der Hilfsbetriebewicklung verbunden ist, wobei auf der Gleichspannungs-(DC)-Seite des selbstgeführter, aktiv geregelter Hilfs-Wechselrichter zumindest ein elektrischer Speicher vorgesehen ist.

Erfindungsgemäß wird somit den Hilfsbetrieben, also den Hilfsaggregaten wie Lüfter und Hydraulikpumpe des Dieselmotors und den Hilfsbetriebeverbrauchern, wie Fremdlüftern der Fahrmotoren direkt oder indirekt über einen Speicher, vorzugsweise einen Batteriespeicher oder Supercaps elektrische Energie bereitgestellt.

Dieser Speicher wird vorzugsweise über einen Hauptzwischenkreis des Betriebs-Zwischenkreisumrichters gespeist. Diese Energiezufuhr kann dabei auch ergänzend oder alternativ aus einem Bremsvorgang eines Fahrmotors resultieren. Ebenso kann eine Speisung des Speichers über die Hilfsbetriebewicklung der dynamoelektrischen Maschine und einen selbstgeführten, aktiv geregelten Hilfs-Wechselrichter erfolgen. Ebenso ist eine Speisung des Speichers über die Hauptwicklung der dynamoelektrischen Maschine und den Gleichrichter möglich. Ebenso kann der Speicher auch extern geladen werden. Es sind selbstverständlich auch gleichzeitig mehrere "Energiezufuhren" möglich.

Unter der direkten Speisung werden dabei Hilfsbetriebverbraucher verstanden, die direkt an der Gleichspannungsseite (DC) des selbstgeführten, aktiv geregelten Hilfs-Wechselrichter angeordnet sind und damit am Speicher angeordnet bzw. elektrisch kontaktiert sind.

Unter der indirekten Speisung werden Hilfsaggregate, wie Lüfter und Hydraulikpumpe verstanden, die dem Dieselmotor zuzuordnen sind und überwiegend über diesen angetrieben werden. Dies geschieht mittels Energie aus dem Speicher, die über den selbstgeführten, aktiv geregelten Hilfs-Wechselrichter, der Hilfsbetriebewicklung der dynamoelektrischen Maschine zu Verfügung gestellt wird, um dann den Dieselmotor und damit die Hilfsaggregate antreiben.

Dabei wird im Betriebs-Zwischenkreisumrichter, der einen Gleichrichter und zumindest einen Wechselrichter aufweist, um die Antriebsleistung vom Dieselmotor über die dynamoelektrische Maschine den Fahrmotoren bereitzustellen, ein vergleichsweise preisgünstiger Gleichrichter zur Übertragung der Antriebsleistung in den Zwischenkreis eingesetzt. Die dynamoelektrische Maschine arbeitet in diesem Betriebszustand als Generator, um dem oder den elektrischen Fahrmotoren elektrische Energie bereitzustellen.

Um aber nun beispielsweise bei Bergabfahrten des Fahrzeugs ein Teil der Bremsenergie der Fahrmotoren zu nutzen, ist elektrisch parallel zu dem Gleichrichter ein selbstgeführter, aktiv geregelter Hilfs-Wechselrichter vorgesehen, um über den Generator - der dann als Motor arbeitet und den Dieselmotor antreibt - beispielsweise Hilfsaggregate des Dieselmotors sozusagen indirekt mit Energie zu versorgen.

Bei diesen Bergabfahrten kann auch oder ergänzend dieser Speicher auf der DC-Seite des selbstgeführten, aktiv geregelten Hilfs-Wechselrichter aus dem Zwischenkreis des Betriebs-Zwischenkreisumrichters aufgeladen werden. Ebenso ist eine direkte Speisung von Hilfsbetriebeverbrauchern aus dem Zwischenkreis des Betriebs-Zwischenkreisumrichters möglich.

Im Bremszustand des Fahrzeugs, beispielsweise bei Bergabfahrten wird der Dieselmotor ohne Treibstoffverbrauch betrieben. Der elektrisch parallel zum Gleichrichter vorgesehene selbstgeführte, aktiv geregelte Hilfs-Wechselrichter wird auch als Hilfs-AFE (Active-Front End) bezeichnet. Dieser Hilfs-AFE wird lediglich dann angesteuert, wenn der oder die Fahrmotoren Energie in den Zwischenkreis des Betriebs-Zwischenkreisumrichters einspeisen und die Hilfsaggregate und/oder die Hilfsbetriebeverbraucher versorgt und/oder der Speicher geladen und die Reibungsverluste gedeckt werden müssen. Er ermöglicht somit einen elektrischen Leistungstransport von der ACzur DC-Seite oder von der DC- zur AC-Seite.

Die darüber hinaus gehende elektrische Energie des Hauptzwischenkreises kann auch einem Bremswiderstand zugeführt werden.

Ein Steuergerät weist die durch einen Bremsvorgang zur Verfügung stehende Energie mittels einer vorgebbaren Priorisierung der Anforderungen den jeweiligen "Verbrauchern", wie Speicher, Hilfsaggregat, Hilfsbetriebeverbraucher und ev. Bremswiderstand zu.

An den Zwischenkreis des Betriebs-Zwischenkreisumrichters sind weiterhin optional ein oder mehrere elektrische Bremswiderstände angeschlossen, die über das Steuergerät oder einen Bremschopper ein- und ausgeschaltet werden können.

Der Generator ist als dynamoelektrische Maschine ausgeführt, die sowohl generatorisch als auch motorisch betreibbar ist. Der im motorischen Betrieb arbeitende Generator hält den Dieselmotor auf der notwendigen Drehzahl und damit die Hilfsaggregate, wie z.B. eine Hydraulikpumpe, weiterhin in Betrieb, ohne dass der Dieselmotor Treibstoff verbraucht. Dabei wird die dynamoelektrische Maschine mittels der Hilfsbetriebewicklung betrieben.

Eine weitere Lösung der gestellten Aufgabe gelingt auch durch Antriebssystem eines diesel-elektrischen Fahrzeugs mit
- zumindest einem Dieselmotor,
- zumindest einer dynamoelektrischen Maschine, vorzugsweise als Generator arbeitend, mit einer Hauptwicklung und einer Hilfsbetriebewicklung, wobei die dynamoelektrische Maschine mit dem Dieselmotor mechanisch gekoppelt ist und insbesondere die elektrische Leistung für zumindest einen elektrischen Antrieb bereitstellt,
wobei der elektrische Antrieb zumindest einen elektrischen Fahrmotor und einen Betriebs-Zwischenkreisumrichter aufweist, mit zumindest einem modifizierten Gleichrichter und zumindest einem Wechselrichter, wobei der modifizierte Gleichrichter an der Hauptwicklung angeschlossen ist und einem selbstgeführten, aktiv geregelter Hilfs-Wechselrichter, der an der Hilfsbetriebewicklung der dynamoelektrischen Maschine angeschlossen ist, wobei der selbstgeführte, aktiv geregelter Hilfs-Wechselrichter eine Gleichspannungs-(DC)-Seite und eine Wechselspannungs-(AC)-Seite aufweist, wobei auf der Gleichspannungs-(DC)-Seite des selbstgeführten, aktiv geregelter Hilfs-Wechselrichter zumindest ein elektrischer Speicher vorgesehen ist.

Als modifizierter Gleichrichter wird dabei ein Gleichrichter verstanden, der im Normalbetrieb (Fahrmodus des Fahrzeugs) die volle Leistung über Freilaufdioden gleichrichtet und in den Zwischenkreis des Betriebs-Zwischenkreisumrichters speist. Es ist in dem modifizierten Gleichrichter ein selbstgeführter, aktiv geregelter Wechselrichter (AFE) vorgesehen, der nicht auf die volle (Rückspeise-)Leistung dimensioniert ist. Die IGBTs dieses AFEs werden also nur benutzt, um Bremsenergie direkt zur dynamoelektrischen Maschine zu leiten. Diese IGBTs sind im modifizierten Gleichrichter verbaut.

Die IGBTs dieses AFEs sind dabei also auf max. 30% der Leistung im Gleichrichterbetrieb ausgelegt.

Die Energie, z.B. in einem Bremsbetrieb, liegt also zunächst dem Zwischenkreis des Betriebs-Zwischenkreisumrichters vor. Über die IGBTs des modifizierten Gleichrichters wird die Energie der Hauptwicklung der dynamoelektrischen Maschine bereitgestellt. Damit kann der Dieselmotor angetrieben werden, der damit die Hilfsaggregate, wie Lüfter und Hydraulikpumpen, speist.

Des Weiteren wird über die Hilfsbetriebewicklung und einen selbstgeführten, aktiv geregelten Hilfs-Wechselrichter (Hilfs-AFE) Energie einem Speicher und/oder Hilfsbetriebeverbrauchern zur Verfügung gestellt.

Erfindungsgemäß wird somit den Hilfsbetrieben, also den Hilfsaggregaten und/oder den Hilfsbetriebeverbrauchern über den Dieselmotor bzw. den selbstgeführten, aktiv geregelten Hilfs-Wechselrichter (Hilfs-AFE) Energie direkt bereitgestellt, d.h. wenn diese Energie beispielsweise durch einen Bremsvorgang zur Verfügung steht. Die erforderliche Energie der Hilfsbetriebe kann aber auch indirekt, d.h. aus dem Speicher, vorzugsweise einem Batteriespeicher oder Supercaps bereitgestellt werden.

Unter direkter Speisung wird verstanden, dass elektrische Energie den Hilfsaggregaten zur Verfügung gestellt wird, wenn sie aktuell anliegt bzw. generiert wird. Unter der indirekten Speisung wir folgerichtig verstanden, dass Energie den Hilfsaggregaten gepuffert über den Speicher zur Verfügung gestellt wird.

Dieser Energietransport, insbesondere Energiezufuhr beim Laden des Speichers erfolgt über die Hilfsbetriebewicklung der dynamoelektrischen Maschine und den selbstgeführten, aktiv geregelten Hilfs-Wechselrichter (Hilfs-AFE). Sie resultiert beispielsweise aus einem Bremsvorgang eines oder mehrerer Fahrmotoren des Fahrzeugs oder auch im Normalbetrieb des Fahrzeugs.

Damit ist eine Speisung, also ein Laden des Speichers über die Hilfsbetriebewicklung der dynamoelektrischen Maschine und den selbstgeführten, aktiv geregelten Hilfs-Wechselrichter, der dann als Gleichrichter fungiert, sowohl im Normalbetrieb als auch im Bremsbetrieb, möglich.

Das Fahrzeug ist dabei im Fahrmodus und der oder die Fahrmotoren beziehen also Energie über den Betriebs-Zwischenkreisumrichter aus der dynamoelektrischen Maschine, die als Generator fungiert.

Erfindungsgemäß ist ein Steuergerät vorgesehen, das im Bedarfsfall die IGBTs im Hilfs-AFE, die IGBTs im modifizierten Gleichrichter, und den Energiefluss zum Speicher, zu den Hilfsaggregaten steuert. Dem Steuergerät ist dabei ein vorgebbarer Algorithmus hinterlegt, der eine bedarfsabhängige Priorisierung des Energieflusses bewirkt. Damit kann auch beispielsweise "Restenergie" des Zwischenkreises in einem Bremswiderstand geführt werden.

Unter direkter Kopplung werden dabei Hilfsbetriebeverbraucher verstanden, die direkt an der Gleichspannungsseite (DC) des selbstgeführten, aktiv geregelten Hilfs-Wechselrichter angeordnet sind und damit am Speicher angeordnet elektrisch kontaktiert sind.

Unter indirekter Kopplung werden Hilfsaggregate, wie Lüfter und Hydraulikpumpe verstanden, die dem Dieselmotor zuzuordnen sind und mittels Energie aus dem Speicher, den selbstgeführten, aktiv geregelten Hilfs-Wechselrichter, die Hilfsbetriebewicklung der dynamoelektrischen Maschine den Dieselmotor und damit die Hilfsaggregate antreiben.

Bei Bergabfahrten des Fahrzeugs kann somit auch und/oder ergänzend dieser Speicher auf der DC-Seite des selbstgeführten, aktiv geregelten Hilfs-Wechselrichter aufgeladen werden.

Im Bremsbetrieb des Fahrzeugs, beispielsweise bei Bergabfahrten wird der Dieselmotor ohne Treibstoffverbrauch betrieben. Der Hilfs-AFE wird dann angesteuert, wenn der oder die Fahrmotoren Energie in den Betriebs-Zwischenkreis einspeisen und die Hilfsaggregate versorgt und die Reibungsverluste gedeckt sind und zusätzlich Energie von den Hilfsbetriebeverbrauchern angefordert wird und/oder der Speicher geladen werden muss. Die überschüssige Energie wird grundsätzlich in den Speicher geschoben oder kann auch optional einem Bremswiderstand zugeführt werden.

Die IGBTs des modifizierten Gleichrichters für die Rückspeisung sind dabei beispielsweise für ca. 20 bis 30% der Antriebsnennleistung des Generators ausgelegt. Dies reicht aus um die Hilfsaggregate, wie Hydraulikpumpe und/oder Lüfter, die Hilfsbetriebeverbraucher und den Ladevorgang des Speichers zu gewährleisten.

Die leistungsmäßige Auslegung des IGBTs ist dabei je nach Ausstattung des Fahrzeugs, d.h. Anzahl der Hilfsaggregate etc., anzupassen.

Grundsätzlich kann bei beiden Ausführungen die Traktionsleistung des Fahrzeugs damit erhöht werden, da die gespeicherte Energie des Speichers den Verbrauch der Hilfsbetriebeverbraucher abdeckt und/oder die gespeicherte Energie des Speichers als Antriebsunterstützung, also Boost-Antrieb über die Hilfsbetriebewicklung dienen kann.

Die Spannungsebene im Hilfszwischenkreis des selbstgeführten, aktiv geregelten Hilfs-Wechselrichter ist geringer als im Betriebs-Zwischenkreis des Hauptantriebstranges. Damit kann verfügbare Batterietechnologie eingesetzt werden.

Die Hilfsbetriebewicklung in der dynamoelektrischen Maschine dient ebenso als galvanische Trennung zwischen den unterschiedlichen Spannungsebenen. Deshalb benötigt dieser Speicher keine DC-DC-Steller oder Drosseln und Maßnahmen zur verstärkten Spannungsisolation.

Deshalb kann der Speicher räumlich betrachtet auch vergleichsweise klein ausfallen.

Zum Anlassen des Dieselmotors kann die elektrische Energie des Speichers verwendet werden. Dabei wird über den Hilfs-AFE und die Hilfsbetriebewicklung der dynamoelektrischen Maschine der Dieselmotor gestartet. Dadurch kann ein separater Dieselanlasser entfallen.

An den Speicher kann auch ein DC-DC-Steller angeschlossen werden, der für ein ergänzendes Bordnetz zur Verfügung steht. So ein Bordnetz könnte beispielsweise auch für die Hilfsaggregate des Dieselmotors die erforderliche Leistung bereitstellen. Damit wäre der Dieselmotor von der direkten Kopplung und damit Versorgung seiner Hilfsaggregate über den Dieselmotor entbunden.

Diese aufgeführten Maßnahmen reduzieren den Treibstoffverbrauch des Dieselmotors und dienen damit dem Emissionsschutz.

Der Dieselmotor ist ein Verbrennungsmotor. Statt des Dieselmotors kann auch ein anderer Verbrennungsmotor, wie ein OttoMotor, betreibbar mit Benzin und/oder Gas, verwendet werden. Der Begriff diesel-elektrisches Fahrzeug kann als Synonym für entsprechende Fahrzeuge betrachtet werden, die statt eines Diesels eine andere Verbrennungskraftmaschine aufweisen.

Die Erfindung sowie weitere vorteilhafte Ausgestaltungen der Erfindung werden anhand prinzipiell dargestellter Ausführungsbeispiele näher erläutert. Darin zeigen:
- FIG 1: ein Prinzipschaltbild eines Antriebssystems,
- FIG 2: ein weiteres Prinzipschaltbild eines Antriebssystems

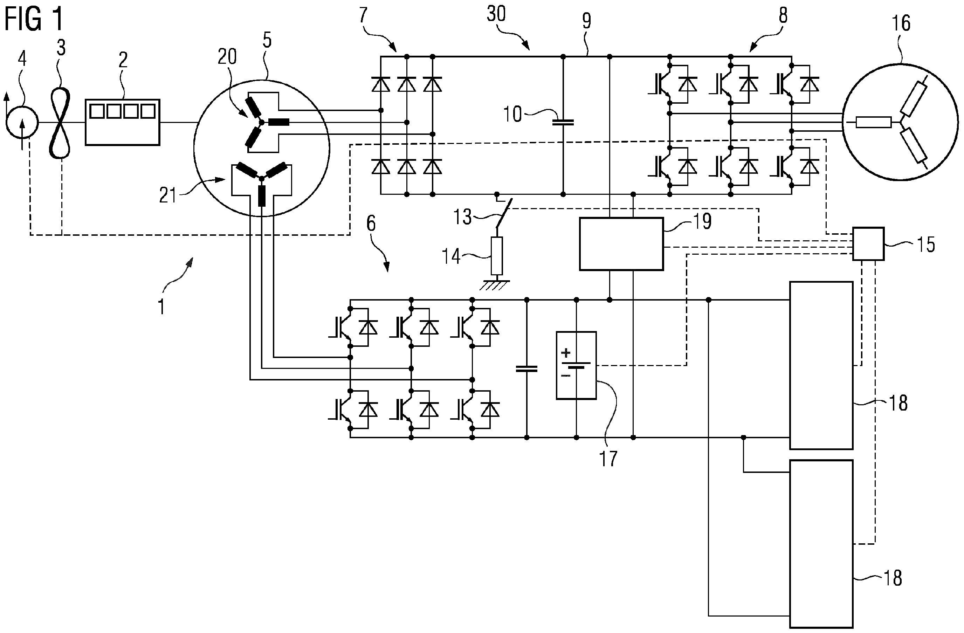

FIG 1 zeigt eine Prinzipdarstellung eines Antriebssystems 1 eines Fahrzeugs, das mit einem Dieselmotor 2 angetrieben wird. Der Dieselmotor 2 kann auch allgemein als Verbrennungsmotor ausgelegt sein, also seine Antriebsenergie aus anderen Kraftstoffen, wie Benzin oder Gas beziehen. Das Fahrzeug benötigt unter anderem Hilfsaggregate, wie z.B. einen Lüfter 3 oder eine Hydraulikpumpe 4, um Lenkbewegungen des Fahrzeugs zu gewährleisten.

Der Dieselmotor 2 ist mit einer dynamoelektrischen Maschine 5 mechanisch direkt gekoppelt, die überwiegenden als Generator betrieben wird. Ein Stator dieser dynamoelektrischen Maschine 5 weist eine Hauptwicklung 20 in einer vorgegebenen Spannungsebene (Niederspannung oder Mittelspannung) auf, die durch elektromagnetische Wechselwirkung mit einem Läufer der dynamoelektrischen Maschine 5 motorisch oder generatorisch arbeiten kann. Die dynamoelektrische Maschine 5 als Generator versorgt u.a. elektrisch einen oder mehrere Betriebs-Zwischenkreisumrichter, an den jeweils ein oder mehrere Fahrmotoren 16 elektrisch angeschlossen sind.

Der Betriebs-Zwischenkreisumrichter 30 weist zumindest einen Gleichrichter 7 und einen Wechselrichter 8 auf, die über einen Gleichspannungszwischenkreis 9 elektrisch gekoppelt sind. Der Gleichspannungszwischenkreis 9 weist mindestens einen Kondensator 10 auf.

Erfindungsgemäß ist an den Gleichspannungszwischenkreis 9 ein Hilfs-AFE 6 angeschlossen, das auch direkt mit der dynamoelektrischen Maschine 5 einer Hilfsbetriebewicklung 21 elektrisch verbunden ist und damit elektrisch parallel zum Gleichrichter 7 angeordnet ist.

Als Hilfs-AFE 6 (Active-Front End) wird dabei ein aktiv geregelter Hilfs-Wechselrichter bezeichnet. Das Hilfs-AFE 6 kann in Niederspannungsausführung (Spannungsebenen 50V bis 700V) oder in Mittelspannungsausführung (1kV bis 6,5kV) ausgeführt sein. Er ermöglicht somit einen elektrischen Leistungstransport von der AC- zur DC-Seite oder von der DC- zur AC-Seite.

Das Hilfs-AFE 6 liegt auch im Fahrbetrieb an Spannung, über seine Freilaufdioden wird auch dessen Zwischenkreis aufgeladen. Damit im Fahrbetrieb des Antriebssystems 1 kein Strom über den parallel zum Hilfs-AFE-Zwischenkreis 6 liegenden Gleichrichter 7 zum Gleichspannungszwischenkreis 9 gelangt, ist ein Anbindungselement 19 vorgesehen, das im Fahrbetrieb des Antriebssystem 1 geöffnet, im Bremsbetrieb geschlossen ist.

Dieses Anbindungselement 19 kann als elektronischer Schalter oder mechanischer Schalter ausgeführt sein.

Erfindungsgemäß ist an der Hilfsbetriebewicklung 21 der dynamoelektrischen Maschine 5 der Hilfs-AFE 6 angeschlossen. Die DC-Seite des Hilfs-AFE 6 weist einen Speicher 17 und verschiedene Hilfsbetriebeverbraucher 18 auf.

Mit der Erfindung wird ermöglicht, dass nunmehr elektrische Energie des Gleichspannungszwischenkreis 9, beispielsweise aus einem Bremsvorgang des oder der Fahrmotoren 16 an die dynamoelektrische Maschine 5 rückgespeist wird, die nunmehr als Motor über eine Hilfsbetriebewicklung 21 den Dieselmotor 2 antreibt und somit gewährleistet, dass die Hilfsaggregate, wie die Hydraulikpumpe 4 und der Lüfter 3 weiter betrieben werden. Vorteilhafterweise benötigt der Dieselmotor 2 während solcher Betriebsphasen dabei keinerlei Treibstoff und die Emissionswerte gehen in diesem Betriebszustand auf Null zurück.

Dabei wird die Energie des Gleichspannungszwischenkreises 9 über das Anbindungselement 19 auf die DC-Seite des Hilfs-AFE geführt. Dort gelangt sie entweder auf die AC-Seite des Hilfs-AFE und kann dann von dort über die Hilfsbetriebewicklung 21 den Dieselmotor 2 antreiben, oder versorgt von der DC-Seite den Speicher und/oder die Hilfsbetriebeverbraucher 18.

Folgende Fahrmodi treten nunmehr auf:
Im Fahrmodus des Fahrzeugs arbeitet die dynamoelektrische Maschine 5 als Generator und treibt über den Betriebs-Zwischenkreisumrichter 30 die Fahrmotoren 16 an. Das Anbindungselement 19 ist dabei normalerweise offen. Der Speicher 17 kann über die Hilfsbetriebewicklung 21 und den Hilfs-AFE 6 geladen werden. Die Hilfsaggregate 3, 4 werden über den Dieselmotor 2 gespeist. Die Hilfsbetriebeverbraucher 18 werden - soweit erforderlich direkt über das Hilfs-AFE 6 oder den Speicher 17 gespeist.

Die Energie des Speichers 17 kann auch als Boost-Unterstützung über die Hilfsbetriebewicklung 21 oder einen geschlossenes Anbindungselement 19 dem Antrieb bereitgestellt werden.

Vorstellbar ist dabei auch, dass über die Hilfsbetriebewicklung 21, den Hilfs-AFE 6 der Speicher 17 aufgeladen wird und die Hilfsbetriebeverbraucher 18 versorgt werden. Die Hilfsaggregate werden über den motorischen Dieselbetrieb versorgt.

Im Bremsfall wird elektrische Energie des Gleichspannungszwischenkreises 9 entweder den Hilfsaggregaten 3, 4 über den Dieselmotor 2 und/oder dem Speicher 17 und/oder den Hilfsbetriebeverbrauchern 18 bereitgestellt und/oder in einen Bremswiderstand 14 gegeben, der über einen Schalter 13 zuschaltbar ist.

Dies steuert ein Steuergerät 15 des Fahrzeugs, das die jeweilige erforderlichen Energie- und Leistungsflüsse aus den jeweiligen Betriebsmodi des Fahrzeugs ableitet.

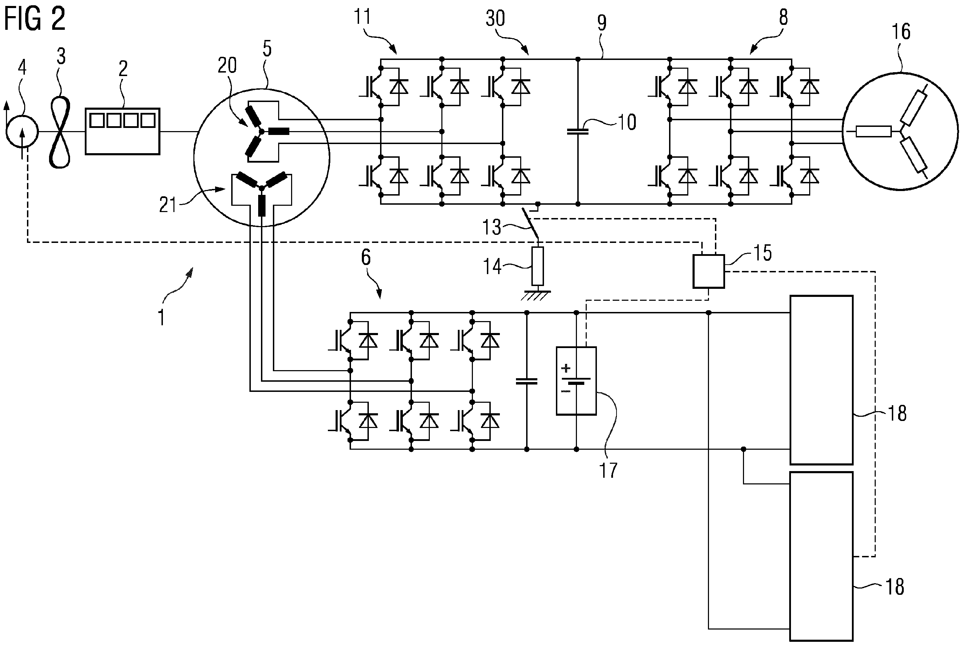

FIG 2 zeigt eine Prinzipdarstellung eines weiteren Antriebssystems 1 eines Fahrzeugs, das mit einem Dieselmotor 2 angetrieben wird. Der Dieselmotor 2 kann ebenso allgemein als Verbrennungsmotor ausgelegt sein, also seine Antriebsenergie aus anderen Kraftstoffen, wie Benzin oder Gas beziehen. Das Fahrzeug benötigt unter anderem Hilfsaggregate, wie z.B. einen Lüfter 3 oder eine Hydraulikpumpe 4, um Lenkbewegungen des Fahrzeugs zu gewährleisten.

Der Dieselmotor 2 ist mit einer dynamoelektrischen Maschine 5 mechanisch direkt gekoppelt, die überwiegenden als Generator betrieben wird. Ein Stator dieser dynamoelektrischen Maschine 5 weist eine Hauptwicklung 20 in einer vorgegebenen Spannungsebene (Niederspannung oder Mittelspannung) auf, die durch elektromagnetische Wechselwirkung mit einem Läufer der dynamoelektrischen Maschine 5 motorisch oder generatorisch arbeiten kann. Die dynamoelektrische Maschine 5 als Generator versorgt u.a. elektrisch einen oder mehrere Betriebs-Zwischenkreisumrichter, an den jeweils ein oder mehrere Fahrmotoren 16 elektrisch angeschlossen sind.

Der Betriebs-Zwischenkreisumrichter 30 weist zumindest einen modifizierten Gleichrichter 11 und einen Wechselrichter 8 auf, die über einen Gleichspannungszwischenkreis 9 elektrisch gekoppelt sind. Der Gleichspannungszwischenkreis 9 weist mindestens einen Kondensator 10 auf.

Erfindungsgemäß ist an einer Hilfsbetriebewicklung 21 der dynamoelektrischen Maschine 5 ein Hilfs-AFE 6 angeschlossen. Die DC-Seite des Hilfs-AFE 6 weist einen Speicher 17 und verschiedene Hilfsbetriebeverbraucher 18 auf.

Als Hilfs-AFE 6 (Active-Front End) wird dabei ein aktiv geregelter Hilfs-Wechselrichter bezeichnet. Das Hilfs-AFE 6 kann in Niederspannungsausführung (Spannungsebenen 50V bis 700V) oder in Mittelspannungsausführung (1kV bis 6,5kV) ausgeführt sein.

Mit der Erfindung wird ermöglicht, dass nunmehr elektrische Energie des Gleichspannungszwischenkreises 9 über den modifizierten Gleichrichter 11, beispielsweise aus einem Bremsvorgang des oder der Fahrmotoren 16 in die dynamoelektrische Maschine 5 rückgespeist wird, die nunmehr als Motor den Dieselmotor 2 antreibt und somit gewährleistet, dass die Hilfsaggregate, wie die Hydraulikpumpe 4 und der Lüfter 3 weiter betrieben werden. Vorteilhafterweise benötigt der Dieselmotor 2 während solcher Betriebsphasen dabei keinerlei Treibstoff und die Emissionswerte gehen in diesem Betriebszustand auf Null zurück.

Des Weiteren kann ergänzend oder alternativ über die Hilfsbetriebewicklung 21 und den Hilfs-AFE 6 der Speicher 17 aufgeladen und/oder die Hilfsbetriebeverbraucher 18 versorgt werden.

Der prinzipielle Erfindungsgedanke ist auch bei mehreren Fahrmotoren 16 anwendbar ist, die elektrisch aus einem gemeinsamen Gleichspannungszwischenkreis 9 gespeist werden.

Ebenso könnten auch mehrere Gleichspannungszwischenkreise 9 elektrisch parallelgeschaltet sein und vorzugsweise aus einer dynamoelektrischen Maschine 5 gespeist werden.

Auch wenn die dynamoelektrische Maschine 5 als Mittelspannungsgenerator 5 neben der Hauptwicklung 20 eine Hilfsbetriebewicklung 21 für die Versorgung der Hilfsbetriebeverbraucher 18, beispielsweise Lüfter für Generator und Fahrmotoren, besitzt, kann die AC-Seite des Hilfs-AFE 6 unter Berücksichtigung der erforderlichen Isolation direkt mit der Hilfsbetriebewicklung 21 der dynamoelektrischen Maschine ohne Zwischenschaltung eines Transformators verbunden.

Diese Wicklungssysteme - Hauptwicklung 20 und Hilfsbetriebewicklung 21 - befinden sich in Nuten eines Stators der dynamoelektrischen Maschine 5. Die Leiter dieser Wicklungssysteme können dabei unter Berücksichtigung einer geeigneten Isolation auch in gemeinsamen Nuten des Stators angeordnet sein.

Folgende Fahrmodi sind grundsätzlich vorstellbar:
Im Fahrmodus arbeitet die dynamoelektrische Maschine 5 als Generator und treibt über den Betriebs-Zwischenkreisumrichter 30 die Fahrmotoren 16 an. Der Speicher 17 kann über die Hilfsbetriebewicklung 21 und den Hilfs-AFE 6 geladen werden. Die Hilfsaggregate 3, 4 werden über den Dieselmotor 2 gespeist. Die Hilfsbetriebeverbraucher 18 werden - soweit erforderlich direkt aus dem Hilfs-AFE 6 oder dem Speicher 17 gespeist.

Die Energie des Speichers kann auch als Boost-Unterstützung über die Hilfsbetriebewicklung 21 bereitgestellt werden.

Im Bremsfall wird elektrische Energie des Gleichspannungszwischenkreises 9 entweder den Hilfsaggregaten 3, 4 über den Dieselmotor 2 und/oder dem Speicher 17 und/oder den Hilfsbetriebeverbrauchern 18 bereitgestellt und/oder in einen Bremswiderstand 14 über einen Schalter 13 gegeben.

Dies steuert ein Steuergerät 15 des Fahrzeugs, das die jeweilig erforderlichen Energie- und Leistungsflüsse aus den jeweiligen Betriebsmodi des Fahrzeugs ableitet.

Falls die Betriebe-Zwischenkreisumrichter 30 flüssigkeitsgekühlt sind, sind auch Kühlelemente des Hilfs-AFE 6 und/oder Speichers 17 in einen bestehenden Flüssigkeitskühlkreislauf anschließbar, so dass auch eine ausreichende Kühlung dieses Hilfs-AFE 6 gewährleistet ist. Dabei fördert eine Kühlpumpe eine Kühlflüssigkeit in einem geschlossenen Kühlkreislauf, wobei aus den Wärmequellen, wie beispielsweise dem Hilfs-AFE 6 Wärme aufgenommen wird und die Kühlflüssigkeit mittels einer Rückkühlers 14 rückgekühlt wird.

Falls eine Luftkühlung vorliegen sollte, werden dementsprechende Kühlelemente, die mit Rippen versehen sind, am Hilfs-AFE 6 und/oder Speichers 17 angebracht und so positioniert, dass diese in einem bereits vorhandenen Kühlluftstrom liegen.

Durch die modulare Ergänzung des Hilfs-AFE 6 an bestehende Antriebssysteme 1 und deren Kühlsysteme ist das Hilfs-AFE 6 mitsamt Speicher 17 auch einfach an bestehenden Fahrzeugen nachrüstbar.

Die diesel-elektrischen Fahrzeuge können dabei Miningfahrzeuge, Baumaschinen, Wald- und Landwirtschaftsmaschinen, Hafenfahrzeuge, Industriefahrzeuge, öffentliche Busse, für den Straßenverkehr zugelassene LKWs oder PKWs sein. Es kann sich ebenso über schienengebundene Fahrzeuge, wie beispielsweise Triebzüge, Strassenbahnen handeln.

## Patentansprüche

1. Antriebssystem (1) eines diesel-elektrischen Fahrzeugs mit
- zumindest einem Dieselmotor (2),
- zumindest einer dynamoelektrischen Maschine (5), vorzugsweise als Generator (5) arbeitend, mit einer Hauptwicklung (20) und einer Hilfsbetriebewicklung (21), wobei die dynamoelektrische Maschine (5) mit dem Dieselmotor (2) mechanisch gekoppelt ist und insbesondere die elektrische Leistung für zumindest einen elektrischen Antrieb bereitstellt,
wobei der elektrische Antrieb zumindest einen elektrischen Fahrmotor (16) und einen Betriebs-Zwischenkreisumrichter (30) aufweist, mit zumindest einem Gleichrichter (7) und zumindest einem Wechselrichter (8), wobei elektrisch parallel zu dem Gleichrichter (7) ein selbstgeführter, aktiv geregelter Hilfs-Wechselrichter (6) vorgesehen ist, der mit seiner Gleichspannungs-(DC)-Seite mit einem Hauptzwischenkreis (9) des Betriebs-Zwischenkreisumrichters (30) elektrisch verbunden ist und mit der Wechselspannungs-(AC)-Seite mit der Hilfsbetriebewicklung (21) verbunden ist, wobei auf der Gleichspannungs-(DC)-Seite des selbstgeführter, aktiv geregelter Hilfs-Wechselrichter (6) zumindest ein elektrischer Speicher (17) vorgesehen ist.

2. Antriebssystem (1) eines diesel-elektrischen Fahrzeugs mit
- zumindest einem Dieselmotor (2),
- zumindest einer dynamoelektrischen Maschine (5), vorzugsweise als Generator (5) arbeitend, mit einer Hauptwicklung (20) und einer Hilfsbetriebewicklung (21), wobei die dynamoelektrische Maschine (5) mit dem Dieselmotor (2) mechanisch gekoppelt ist und insbesondere die elektrische Leistung für zumindest einen elektrischen Antrieb bereitstellt,
wobei der elektrische Antrieb zumindest einen elektrischen Fahrmotor (16) und einen Betriebs-Zwischenkreisumrichter (30) aufweist, mit zumindest einem modifizierten Gleichrichter (11) und zumindest einem Wechselrichter (8), wobei der modifizierte Gleichrichter (11) an der Hauptwicklung (20) angeschlossen ist und einem selbstgeführten, aktiv geregelter Hilfs-Wechselrichter (6), der an der Hilfsbetriebewicklung (21) der dynamoelektrischen Maschine (5) angeschlossen ist, wobei der selbstgeführte, aktiv geregelter Hilfs-Wechselrichter (6) eine Gleichspannungs-(DC)-Seite und eine Wechselspannungs-(AC)-Seite aufweist, wobei auf der Gleichspannungs-(DC)-Seite des selbstgeführten, aktiv geregelter Hilfs-Wechselrichter (6) zumindest ein elektrischer Speicher (17) vorgesehen ist.

3. Antriebssystem (1) für eines diesel-elektrischen Fahrzeugs nach Anspruch 2, **dadurch gekennzeichnet, dass** der modifizierte Gleichrichter (11) als AFE ausgelegt ist, der eine Gleichrichtung voller Leistung und eine dazu reduzierte Rückspeisung in die dynamoelektrische Maschine (5) ermöglicht, wobei die Leistung der Rückspeisung max. 30% der der Leistung der Gleichrichtung entspricht.

4. Antriebssystem (1) eines diesel-elektrischen Fahrzeugs nach einem der Ansprüche 1 bis 3, **dadurch gekennzeichnet, dass** Hilfsaggregate (3,4) am Dieselmotor (2) und Hilfsbetriebeverbraucher (18) auf der DC-Seite des selbstgeführten, aktiv geregelten Hilfs-Wechselrichter (6) angeordnet sind.

5. Antriebssystem (1) eines diesel-elektrischen Fahrzeugs nach einem der Ansprüche 1 bis 4, **dadurch gekennzeichnet, dass** ein Steuergerät (15) vorgesehen ist, dass die Energieflüsse, insbesondere bei Bremsvorgängen steuert.

6. Antriebssystem (1) für ein diesel-elektrisches Fahrzeug nach einem der Ansprüche 1 bis 5, wobei statt des Dieselmotors ein Verbrennungsmotor eingesetzt ist, welcher mittels Benzin und/oder Gas betreibbar ist.

7. Diesel-elektrisches Fahrzeug, welches zumindest ein Antriebssystem (1) nach einem der Ansprüche 1 bis 6 aufweist.

8. Verfahren zum Betrieb eines diesel-elektrischen Fahrzeugs, insbesondere Bremsbetrieb bei welchem ein Antriebssystem (1) nach einem der Ansprüche 1 bis 7 verwendet wird.

9. Verfahren zum Anlassen eines diesel-elektrischen Fahrzeugs, indem die dynamoelektrische Maschine (5) als Anlasser des Dieselmotors (2) fungiert, der über die Hilfsbetriebewicklung (21) der dynamoelektrischen Maschine (5) mittels Energie aus dem Speicher (17) gestartet wird.

10. Verfahren zum Bremsen eines diesel-elektrischen Fahrzeugs nach Anspruch 8, indem über die oder den Fahrmotor (16) elektromotorisch gebremst wird, wobei die elektrische Energie über den Betriebs-Zwischenkreisumrichter (30) zu den Hilfsaggregaten und/oder Hilfsbetriebeverbraucher (18) und/oder Bremswiderstände gelangt.
